# EUROPEAN PATENT SPECIFICATION

(11) **EP 1 247 209 B1**
(45) Date of publication and mention of the grant of the patent: **02.07.2003**
(21) Application number: 00966903.7
(22) Date of filing: 26.09.2000
(51) Int. Cl.: G06F 17/30

(54) **GEOGRAPHIC MAPS ON A PERSONAL DIGITAL ASSISTANT (PDA) AND SERVER**
GEOGRAPHISCHE KARTEN AUF EINEM PERSÖNLICHEN DIGITALEN ASSISTENTEN (PDA) UND SERVER
CARTES GEOGRAPHIQUES SUR UN ASSISTANT NUMERIQUE ET SERVEUR

(30) Priority: 12.10.1999 US 159069 P; 29.03.2000 US 193141 P; 29.03.2000 US 193153 P; 29.03.2000 US 193142 P; 30.03.2000 US 193862 P; 31.07.2000 US 629115; 31.07.2000 US 628851; 31.07.2000 US 628850; 31.07.2000 US 629117
(43) Date of publication of application: 09.10.2002
(73) Proprietor: Autodesk, Inc., San Rafael, California 94903 (US)
(72) Inventor: CHITHAMBARAM, Nemmara, Novato, CA 94945 (US); MARANTZ, Howard, Forestville, CA 95436 (US); DEAGUIAR, John, Ricardo, Sebastopol, CA 95472 (US); CONNOR, Edward, J., Fairfax, CA 94930 (US); DING, Scott, Novato, CA 94947 (US)
(74) Representative: Dendorfer, Claus, Dr.
(86) International application number: PCT/US00/26436
(87) International publication number: WO 01/027812

(56) References cited:
- WO-A-97/07467
- US-A- 5 543 789
- US-A- 5 699 244
- US-A- 5 938 721
- POTMESIL M: "Maps alive: viewing geospatial information on the WWW" COMPUTER NETWORKS AND ISDN SYSTEMS, NORTH HOLLAND PUBLISHING. AMSTERDAM, NL, vol. 29, no. 8-13, 1 September 1997 (1997-09-01), pages 1327-1342, XP004095328 ISSN: 0169-7552

## Description

### BACKGROUND OF THE INVENTION

### 1. Field of the Invention.

The present invention relates generally to electronic maps and geographic information, and in particular, to a method, apparatus, and article of manufacture for providing access to maps and geographic data on a personal digital assistant (PDA).

### 2. Description of the Related Art

Computer implemented geographic information systems (GIS) are known in the art. Such GIS provide for the retrieval and display of geographic information (e.g., maps). A GIS is a system of software, hardware, and data that delivers geographic data (street maps, property boundaries, power transmission lines, etc.) along with any associated attribute information. It can show you where a street is and also tell you the street name, when it was last paved, whether it is a one-way street, etc. Using a GIS, a user can perform complex queries (from a web browser to a server) to discover such things as how many people live near the street, what their income level is, and what the zoning laws are. A GIS can operate on a network/internet wherein the geographic information is stored on a server and transmitted to a client/user where the information (map picture and other data) is displayed on a web browser. See e.g. WO 9 707 467 A where a map of the area of a client computer is requested from a map server over the Internet.

For the client to properly display the geographic information, a computer system with the appropriate processing capabilities, software, and memory is required. For example, a client may be required to utilize a computer with a web browser such as INTERNET EXPLORER or NETSCAPE NAVIGATOR and have a minimum of 10 megabytes of available memory. Additionally, to display the geographic data such that a user does not have to wait an inordinate amount of time to retrieve and load the data, an appropriate internet connection (e.g., a 28.8 Kbps (kilo bits per second) modem) and a computer system with significant processing power (e.g., a minimum speed of 100 megahertz) may be required.

Field/utility technicians such as gas company employees, salespersons, plumbers, insurance adjusters, or any type of employment that requires travel to different locations, often utilize or require access to maps and geographic information. Further, such technicians often need to interact with a map to obtain relevant information. For example, a plumber/contractor may want to determine where the main gas line or water line on a street is located. However, while out in the field, the technicians often do not have a network connection, and carrying a laptop or desktop computer is cumbersome and impractical. See e.g. US-A-5 699 244 where a PDA is connected to a desktop computer with map data, using a cable. Thus, it is desirable to have a small (handheld) portable computing device with the capabilities to display and interact with geographic information both online and offline.

Prior art handheld computing devices (also referred to as palm PCs or personal digital assistants (PDAs)), are often used to access and utilize personal information. Many handheld computing devices are available in today's marketplace. Typically, handheld computing devices are only slightly larger than the size of one's palm (hence, the name palm PC) and have a small display screen for viewing a plethora of items. Software can be installed on a PDA to provide enhanced functionality. For example, a personal productivity tool may be installed to provide access to a calendar, contacts, email, Internet browsing, audio books, and audio recording capabilities. Card slots may also be available to provide additional memory or other functions (e.g., a modem). Additionally, some PDAs have infrared (IR) ports for communication.

The PDA environment, however, poses several challenges for geographic information systems in terms of memory, storage, processor speeds, wireless transmission rates, and display attributes. For example, PDAs commonly only maintain 96K or less of memory, 2 Mb (megabytes) or less storage, a 13 MHz processor speed, and a black and white or gray scale display mechanism. Further, field technicians using a PDA need to view and interact with maps displayed. The low bandwidth offered by wireless transmission services, coupled with the slow processors result in unacceptable download times. Also, the technicians in many instances work in trenches or other places where it is not possible to establish a connection to the servers (requiring offline usage).

Thus, there is a need for a geographic information system that overcomes the above described deficiencies on a portable handheld electronic device such as a PDA.

To help better understand embodiments of the invention, it is useful to describe the data utilized in prior art geographic information systems. Prior art geographic information systems display map pictures that are generated using raster data. Raster data represents a map picture with points in a grid. For example, on an X-Y axis, there may be a thousand points in the X direction and seven hundred and sixty points in the Y direction. Each of these points represents a color. For example, some computer systems enable each point to represent one of eight colors. A map picture is then created by determining a color for each point in the grid.

Each map picture is static in that portions of the map picture cannot change independently of each other. That is, a portion of a map picture cannot be modified while viewing the map picture. Thus, while a map image may contain several layers of information, the information is merely a picture with no live data. When a portion of the map picture is to be modified, queried, or to perform any GIS analysis, the browser must request more data from the main server and the entire map picture is replaced. For example, each map picture, such as one representing the United States (US), may contain several layers of information, such as states, counties, and streets. When a user is viewing a map picture of the United States and wishes to view the counties in a particular state, the map picture is replaced with another map picture that contains the additional information. Typically, the additional information is stored at a server computer and the map picture is displayed at a client computer. When the map picture that is displayed is to be modified, the additional information is downloaded from the server computer. Because this additional information is in the form of raster data, it is typically time-consuming to download.

Additionally, some computer systems display schematics generated from vector-based data in computer aided design (CAD) files. Vector-based data uses descriptions of elements of the schematic to create the schematic. For example, if the schematic contains a line segment, the CAD file describes the line segment with an endpoint and a length. Moreover, these computer systems enable users to view data in CAD files from the Internet and Intranets. For instance, when a user at a computer system wishes to view a schematic, the computer system downloads all of the data in the CAD file for that schematic from a data storage device via the Internet. The CAD file typically contains data corresponding to different levels of design of the schematic. In some instances, a user may wish to view only some of the data in the files, for example, the highest level of design of the schematic. In this case, although only a portion of data is required to display the schematic requested by the user, the computer system has already downloaded all of the data in the CAD file. Because it is time-consuming to download all of the data, it is inefficient to do so when only a portion of the data is required to satisfy a user's request. Further, it may not be possible to download all or even a portion of the data onto a PDA.

### SUMMARY OF THE INVENTION

One or more embodiments of the invention provide a system for accessing geographic information using a personal digital assistant (PDA). The system enables the viewing and interaction with geographic information on a PDA. Such information is available while the PDA is connected to a network (i.e., online) and while disconnected (i.e., offline).

The PDA maintains the functionality commonly available in a standard client comprised of a complete computer system. For example, the PDA provides raster maps for multiple zoom levels, with each zoom level comprising multiple tiles allowing for "virtual roaming" across a map. The PDA also provides selectable vector geometry (for interacting and highlighting with user objects), geo-referencing information for map navigation, meta-data in the form of layer definitions (visibility, display attributes, etc.), links to object attributes in databases, links to object reports generated by corporate web servers, uploadable, sharable redlining data (created from scribbles on the field), offline access on a PDA, and a compact PDA database.

Thus, interactive maps and business objects that can be viewed and queried on a PDA, both in an online and offline mode are provided.

### BRIEF DESCRIPTION OF THE DRAWINGS

Referring now to the drawings in which like reference numbers represent corresponding parts throughout:
FIG. 1 schematically illustrates a hardware and software environment for the architecture in accordance with one or more embodiments of the invention;
FIGS. 2A and 2B illustrate the interaction between a thin client, a servlet, and additional components in accordance with one or more embodiments of the invention;
FIG. 3 is a flow chart illustrating the display of a map upon starting up a mapguide application on the PDA in accordance with one or more embodiments of the invention;
FIG. 4 is a flow chart illustrating how a servlet responds to requests from client net services in accordance with one or more embodiments of the invention;
FIG. 5 is a flow chart illustrating how the client and servlet respond to requests to show reports (e.g., maps) in accordance with one or more embodiments of the invention;
FIG. 6 illustrates the implementation wherein a field technician is working offline such that the technician only has net access at the beginning and end of the day in accordance with one or more embodiments of the invention;
FIG. 7 illustrates the implementation wherein a field technician maintains on-demand network access to the back office system in accordance with one or more embodiments of the invention; and
FIG. 8 illustrates the implementation wherein a field technician requests that a report be shown for objects selected on a map on PDA in accordance with one or more embodiments of the invention.

### DETAILED DESCRIPTION OF THE PREFERRED EMBODIMENTS

In the following description, reference is made to the accompanying drawings which form a part hereof, and which is shown, by way of illustration, several embodiments of the present invention.

### Overview

One or more embodiments of the invention provide for the use of the MAPGUIDE geographical information system (available from the assignee of the present invention) on a personal digital assistant (PDA). Software on the PDA is enabled to provide such functionality. Further, a servlet that provides enhanced server functionality interfaces between the web server and the PDA to accommodate any additional processing needed.

Raster maps provide multiple zoom levels with each zoom level comprising multiple tiles that allow for "virtual roaming" across a map. Further, selectable vector geometry (for interacting and highlighting with user objects), geo-referencing information for map navigation, meta-data in the form of layer definitions (visibility, display attributes, etc.), links to object attributes in databases, links to object reports generated by corporate web servers, uploadable, sharable redlining data (created from scribbles on the field), and access to geographical information both online and offline on the PDA are provided. Accordingly, users will maintain the ability to access maps and other geographical information while offline and not connected to a network or server.

### General Architecture

### Hardware Environment

The use, on a PDA, of a modified MAPGUIDE GIS currently available from the assignee of the present invention is provided. The existing MAPGUIDE GIS is more fully described in US-A-5 966 135 entitled "VECTOR-BASED GEOGRAPHIC DATA", by Gregory Andrew Roy, et al.

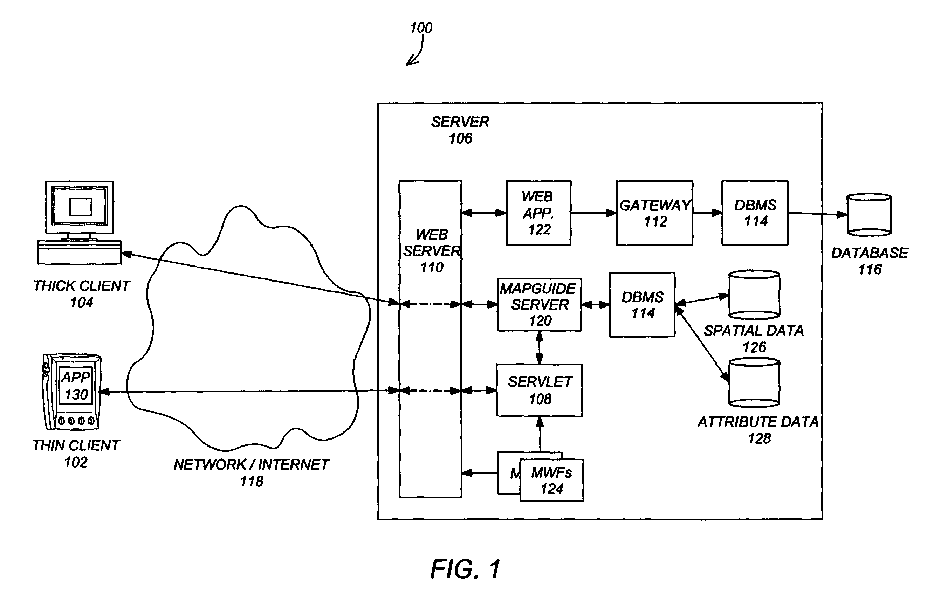

FIG. 1 schematically illustrates a hardware and software environment for the architecture in accordance with one or more embodiments of the invention. A typical distributed computer system 100 uses a network/Internet 118 to connect technicians utilizing clients such as a thin client 102 (e.g. a PDA, WINCE, or PALM device) or a thick client 104 (e.g., a computer system running a browser) to server computers 106.

A thick client 104 as utilized in the existing MAPGUIDE GIS may comprise a computer with a web browser (enhanced with a plugin or viewer) connected to a web server 110 that communicates with a MapGuide server 120 to retrieve data (e.g., raster data, spatial data format (SDF) data 126, attribute data 128, etc.).

A thin client includes three classes of devices: handheld personal computers (HPC), palm-held personal computers (PPC or PDA), and smart phones. Using these devices, a thin client 102 may not provide the full processing and memory capabilities as a thick client 104. For example, as described above with respect to PDAs, thin clients 102 often have memory less than 100K, storage of less than 2-4 MB, processor speeds of 13 MHz, and limited display attributes. Consequently, additional server 106 side support (e.g., more generalized display data, simplified project files, de-cluttering services, and possibly server management of user state) may be utilized. A typical combination of resources may include a network/Internet 118 comprising the Internet, LANs, WANs, SNA networks, or the like, clients 102 and 104 that are PDAs, personal computers or workstations, and servers 106 that are personal computers, workstations, minicomputers, or mainframes.

The network/Internet 118 connects client computers 102 and 104 executing the appropriate software applications 130 to server computers 106 executing Web servers 110, MapGuide servers 120, and servlets 108. MapGuide servers 120 and servlets 108 may be located within or part of web server 110. The server 106 and its components may also be referred to as a back office system. Such a back office system maintains access to corporate databases, synchronization utilities, etc. The Web server 110 is typically a program such as IBM's HyperText Transport Protocol (HTTP) Server or Microsoft's Internet Information Server. The servlet 108 communicates with thin client 102 through web server 110 such that any additional processing required by a thin client 102 may be performed by the servlet 108. Servlet 108 communicates with MapGuide server 120 to obtain needed map data/information. Additionally, servlet 108 accesses map windows files (MWF) 124 to obtain relevant data. The servers 106 may also execute a Common Gateway Interface (CGI) 112 (or Netscape Application Programming Interface (NSAPI), Internet Server Application Programming Interface (ISAPI), etc.), which interfaces between the Web server 110 and a database management system (DBMS) 114 that may be utilized to retrieve relevant geographical data (such as SDF data, raster data, Open DataBase Connectivity (ODBC) data, etc.) from database 116.

Generally, components 108-116 and 120-130 all comprise logic and/or data that is embodied in or retrievable from a device, medium, signal, or carrier, e.g., a data storage device, a data communications device, a remote computer or device coupled to the computer via a network or via another data communications device, etc. Moreover, this logic and/or data, when read, executed, and/or interpreted, results in the steps necessary to implement and/or use the present invention being performed.

Thus, embodiments of the invention may be implemented as a method, apparatus, or article of manufacture using standard programming and/or engineering techniques to produce software, firmware, hardware, or any combination thereof. The term "article of manufacture" (or alternatively, "computer program product") as used herein is intended to encompass logic and/or data accessible from any computer-readable device, carrier, or media.

### Software Embodiments

In accordance with the hardware descriptions, thick clients 104 are complete computer systems with web browsers and full processing capabilities. However, the hardware limitations of a PDA device necessitate software limitations. Accordingly, to enable a geographic information system on a PDA, a thin client 102 executing an application 130 is provided. To accommodate the thin client, additional support on server 106 may be utilized. For example, server 106 may provide more generalized display data, simplified project files, de-cluttering services, and possibly server management of the user state.

The architecture of the invention includes a data model that combines static raster layers (static raster data for multiple layers) with live vector objects to deliver good display and download performance, and also provides interactive selectable objects.

Vector based maps (also referred to as "map layer data" consisting of geographic information/data for one or more layers) are served by a servlet 108 and are an encoded and spatially indexed vector representation of the geographic data. Such vector maps provide for a more "interactive" display with flexible zooming on the client 102, highlighting, etc. Alternatively, the Scalable Vector Graphics (SVG) representation as proposed by the WorldWideWeb Consortium (W3C) may be utilized. SVG allows for three types of graphic objects: vector graphic shapes (e.g., paths consisting of straight lines and curves), images, and text. Graphical objects can be grouped, styled, transformed, and composited into previously rendered objects.

A display background (that is raster based) for the geographic data and display layers is managed as a multi-level library of raster tiles. The raster layers are composed from multiple vector layers on servlet 108, resulting in better download and display performance. The raster map on the PDA allows panning (virtual roaming paradigm), and zooming across multiple levels. A smart-cache on thin client 102 allows the swapping of compact tiles from the database to memory, in a manner appropriate to the device. A single workspace per map provides the definition of the map and the display attributes for the layers on the thin client 102.

PDA users (e.g., technicians) can make scribbles and annotations on the map using a paper and pencil metaphor. To accommodate such markup, embodiments provide a markup object that consists of geometric scribbles (points, lines, polygons, symbols), GPS (global positioning system) input coordinates, annotations (positioned text with font information, etc.), and a geo-reference system that allows the markup object to be integrated into a spatial database 116 using server 106 and displayed on other maps. The markup system captures user input and allows for markup objects to be uploaded to server 106. Further, the level of sharing on the server 106 side is configurable (e.g., personal, group, global, etc.).

### Details of Architecture

### Thin Client 102

The user of a thin client 102 such as a PDA displays geographical information (e.g., maps) using application 130. The architecture of the invention accommodates various thin clients 102 such as WINDOWS CE 2.x devices and smart phones with bitmapped graphics (e.g., SYMBIAN, MOTOROLA, NOKIA, PSION). The startup time for the GIS on the PDA is comparable to other applications on the PDA. Further, the thin client 102 (and application 130) is enabled to store non-spatial data gathered from within the GIS application in a format suitable for uploading to or synchronizing with major relational database management system (RDBMS) vendors.

Thin client 102 supports a variety of net access patterns. For example, thin client 102 can have a connection to the back office system (e.g., server 106) periodically (e.g., at the beginning and/or the end of the day), on-demand (e.g., through a wireless modem), or continuously.

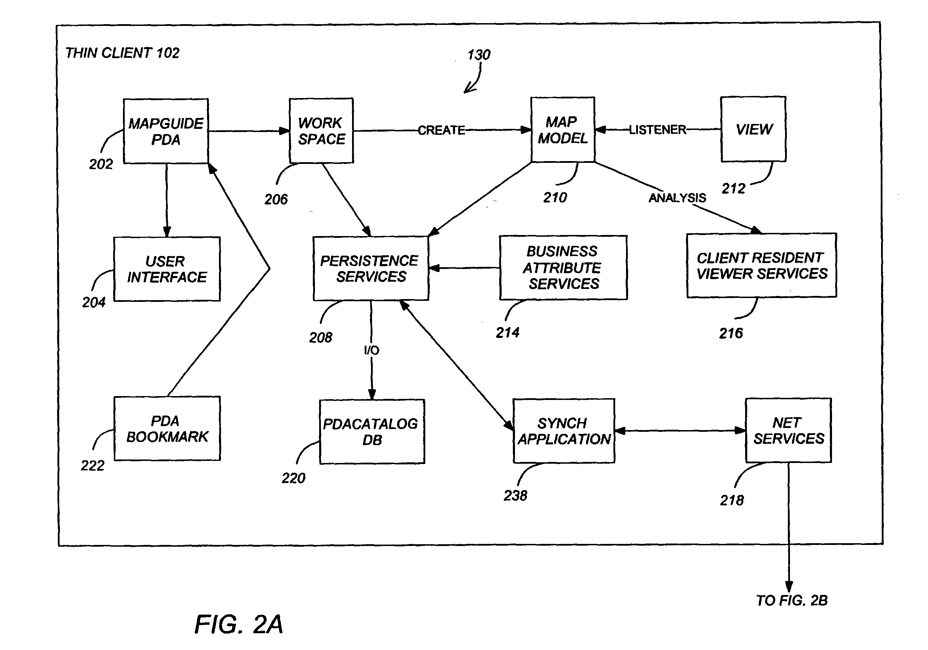

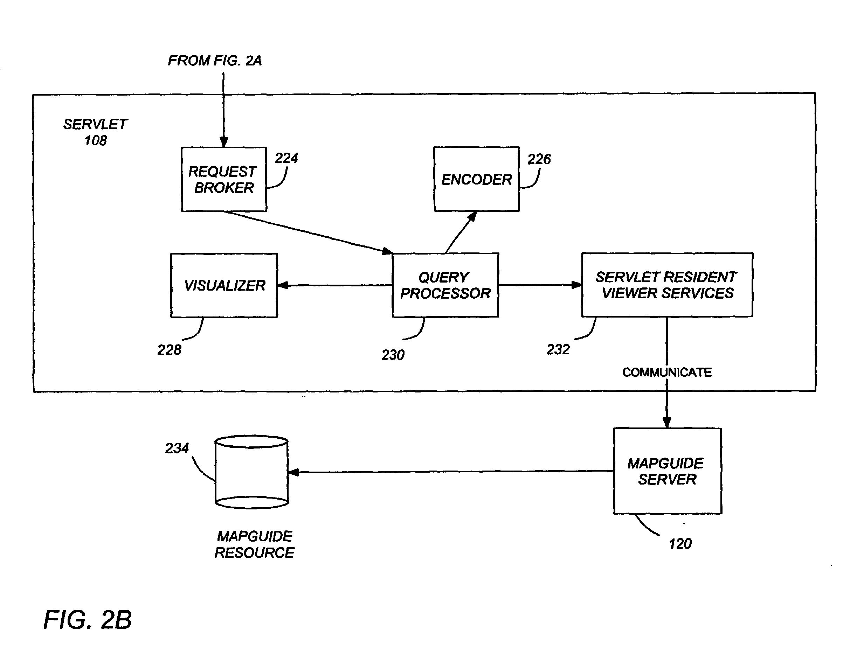

FIGS. 2A and 2B illustrate the interaction between thin client 102, servlet 108, and additional components. Thin client 102 is made up application 130 that comprises subcomponents that allow viewing, navigation, and querying of a map model on the PDA. Thin client 102 and application 130 also includes services that allow management of business attributes 128, communication with servlet 108, and persistence management Accordingly, application 130 collectively refers to the subcomponents on thin client 102 (i.e., subcomponents 202-222 and 238).

To initialize the PDA thin client 102 with the appropriate map data, a user starts up the synchronization application 238. Synchronization application 238 is the application on the PDA thin client 102 responsible for synchronizing information and map data stored in a database 220 on PDA thin client 102 with the relevant map data. Synchronization application 238 utilizes net services 218 to communicate with servlet 108 (through web server 110) and to obtain the relevant map data. Net services component 218 provides services for two way communication (and exchange of data) with servlet 108 (i.e., following the link to FIG. 2B). Accordingly, synchronization application 238 may communicate with servlet 108 to obtain the location of the map data. Thereafter, synchronization application 238 retrieves/obtains the map data from the identified location.

Upon receipt of the map data in the synchronization application 238, persistent services 208 is utilized store the data (by performing various I/O operations) in PDA catalog database 220. Thereafter, the synchronization process is complete. Such synchronization can be performed as often as desired depending on the configuration of the PDA thin client 102. For example, if thin client 102 has a wireless modem, the synchronization operation can be performed whenever desired. If however, a direct connection is required, synchronization can only occur when the thin client 102 is connected to network 118 (or to server 106).

The MapGuide PDA component 202 is the main application that provides the user interface (UI) 204 and responds to events. The user interface component 204 is the placeholder for the user interface controls that are specialized for the PDA. Accordingly, once the relevant map data has been retrieved using synchronization application 238, the MapGuide PDA application 202 may be initialized/started by the user.

MapGuide PDA component 202 requests the persistence services component 208 to load the active workspace 206. The active workspace 206 provides/creates the definition of the map model 210. Thus, the active workspace 206 may be seen as a minimized version of the traditional map file (referred to as a map window file (MWF)) for the PDA 102. The map model 210 provides the services related to maintaining and manipulating map layers and map objects.

The persistent services component 208 loads the workspace 206 by providing object based database management services (ODBMS) using the local PDA database (PDA CatalogDB 220). The PDA catalogDB 220 is the local database of geographic information that is resident on the PDA. Thus, the PDA catalogDB encapsulates the local PDA catalog database and provides the application programming interface (API) for record manipulation.

View component 212 listens to changes in the map model 210 and updates the map display when necessary. The business attributes services/manager component 214 provides services related to managing non-spatial business attributes.

Client resident viewer services 216 interact with map model component 210. The client resident viewer services component 216 provides a flexible architecture that allows viewer service components to reside on either the client 102 or the serviet 108. These services may be represented by two components: the client resident viewer services component 216 of FIG. 2A and the servlet resident viewer services component 232 of FIG. 2B. The services performed by client resident viewer services 216 and servlet resident viewer services 232 may be combined and reside entirely on client 102 or server 106. All client 102 components send requests for viewer services to the client resident viewer services 216. The client resident viewer services component 216 will perform the service if the required components are locally available on the client 102. If not, the request may be delegated to the servlet resident viewer services 232 through synchronization application 238. For example, for a given client configuration, polyline drawing services may be available on client 102, whereas buffering services may be available on servlet 108.

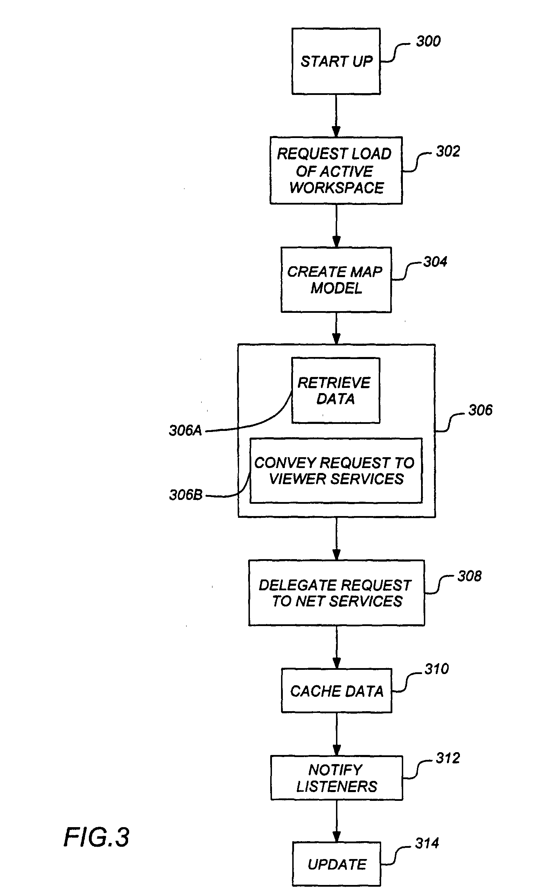

FIG. 3 is a flow chart illustrating the display of a map upon starting up an application 130 such as mapguide application 202 on the PDA in accordance with one or more embodiments of the invention. At step 300, the mapguide PDA 202 is asked to start up. At step 302, the mapguide PDA 202 requests the persistent services 208 to load the active workspace 206 (from the local PDA database 220). At step 304, the workspace 206 uses map definitions to create a new map model 210. The map model 210 populates layers in the model at step 306. The populating of step 306 may be performed by using the persistent services 208 to get data from the local PDA database 220 at step 306A and/or conveying the request to client resident viewer services 216 at step 306B. If client resident viewer services 216 determines that the service requires servlet resident viewer services 232, the client resident viewer services 216 delegates the request to net services 218 through synchronization application 238 at step 308.

At step 310, any downloaded data may be optionally cached in the local database 220 using persistent services 208. The model 210 notifies listeners (including the view 212) of the change at step 312. View 212 updates itself by getting display attributes from the workspace 206 and updating the map display at step 314.

After viewing the map, a user on thin client 102 may markup or redline the map (i.e., the map and attribute data) as desired using a stylus. Markup data comprises pixel data for a markup entity. Application 130 provides the ability to obtain markup data from the user through user interface 204. Application 130 then creates a file comprised of the markup data and provides for uploading the file from thin client 102 to server 106. The file is uploaded to the server 106 by obtaining a socket connection, obtaining an inventory of resident mapsets, searching for markup data associated with the resident mapsets on thin client 102, and uploading all resident markup data to the server 106.

As described above, the markup entity may comprise a markup object that provides various mechanisms for marking up a map. For example, the user may draw a redline line wherein the markup object is a redline object. To draw a redline line, the application 130 determines when a new redline object has been selected and captures the stylus movements in a redline object while the stylus remains in contact with the screen of thin client 102.

In another example, the markup data is a note, and the application 130 is configured to obtain the markup data in a note object. To insert/draw a note, application 130 determines when a new note object has been selected, accepts a user selection of an anchor point in a display of a map on the thin client 102, displays a text entry screen 204 on the thin client 102, accepts text user input in the text entry screen 204, and displays an icon representative of the note at the anchor point.

To accommodate the markup data on server 106, server 106 is configured to obtain a file comprised of markup data for the map and attribute 128 data, convert the markup data to coordinate data, and use the coordinate data to obtain a standard data format (SDF) file that can be used to superimpose the markup data on the map and attribute 128 data. Any component on server 106, including servlet 108, may provide such functionality.

### Servlet 108

A servlet 106 accommodates any additional processing needed by PDA thin client 102 and application 130. To take advantage of existing web servers 110 and servlet technology, servlet 108 may be implemented using the Java programming language. Alternatively, any programming language that performs/provides Java servlet like functionality may be utilized. Accordingly, a single code stream is utilized to implement the servlet 108 on multiple platforms. A minimum set of constraints beyond those provided by web server 110 and the servlet 108 framework provide scalability. For example, each client 102 request may be self-contained in that it is responded to by a different instantiation of the servlet 108.

Servlet 108 may reside in a web server 110 and responds to requests for spatial and attribute data related to map objects, from multiple thin clients 102. Servlet 108 processes the requests, performs the visualization and encoding and places the results in a location that is accessible to the thin clients 102. Additionally, servlet 108 may identify one or more maps included in a mapset, obtain the map data for the one or more maps identified from the server 106, and create the mapset comprised of the map data prior to receiving a request for the map data from a client 102. Such map data retrieval and mapset creation may be performed by servlet 108 in response to receiving a request relating to a work order (e.g., a request to modify, delete, or add a work order).

Additionally, servlet 108 may support the retrieval and creation of a mapset (i.e., map data) using multiple central processing units in parallel. To provide such parallel processing support, servlet 108 identifies one or more maps in a mapset, instantiates separate threads on multiple central processing units to obtain map data for the one or more maps from the server 106 in parallel, assembles a transient database comprised of the map data, and creates a mapset comprised of the map data using the transient database.

FIG. 2B illustrates the subcomponents of servlet 108. The request broker 224 listens to and coordinates requests from multiple clients 102 (i.e., from FIG. 2A), and conveys the requests to the query processor 230. The query processor 230 processes the query using services provided by the servlet resident viewer services component 232. Query processor 230 also uses the visualizer component 228 and encoder component 226 to perform cartographic decluttering and encoding of the data to be sent back to or retrieve by the client 102.

Map data on server 106 is comprised of multiple raster tile and vector object data for an object of the map data. Visualizer component 228 performs configurable decluttering of data in a manner that is appropriate to the display of thin client 102. Accordingly, visualizer 228 generalizes the shape of a vector object by filtering out some of the vector object data. Encoder component 226 compacts and encodes the objects being retrieved by thin client 102. Encoder component 226 differentially encodes a location of an object by encoding an offset for the location of the object with respect to an origin of the raster tile where the object is located. Further, encoder component 226 spatially indexes the vector object data by encoding the bounds of the object.

The raster tiles are stored in row major format. An index for each raster tile is stored following the raster tiles in an order corresponding to the storage of the raster tiles. The index comprises a reference to a record containing the generalized vector object data, and the offset and bounds for each raster tile.

By generalizing, encoding, and spatially indexing the map data, the thin client 102 may determine an object identified by a point by evaluating the bounds of one or more raster tiles to determine the raster tile containing the point, and evaluating the bounds of objects within the raster tile containing the point to determine which object contains the point

Servlet resident viewer services components 232 represents the servlet resident part of viewer services (as described above with respect to FIG. 2A) and communicates with mapguide server 120. The map guide server 120 may be web server 110 or a component of server 106.

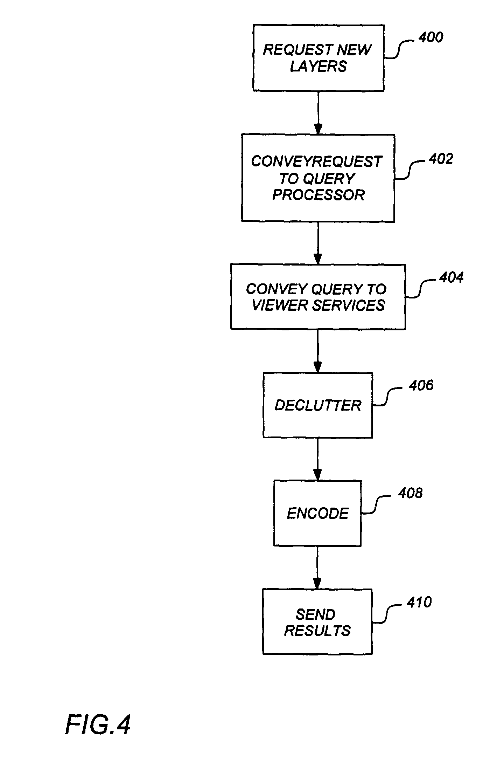

FIG. 4 is a flow chart illustrating how servlet 108 responds to requests received through net services 218. At step 400, net services 218 requests request broker 224 on servlet 108 to download new layers (for dynamic data). At step 402, the request broker 224 (after coordinating requests from other clients 102 if necessary) conveys the request to the query processor 230. The query processor 230 conveys the query to the servlet resident viewer services 232 and obtains the results at step 404. The results are decluttered (if specified) using the visualizer 228 at step 406 and encoded for compaction using the encoder 226 at step 408. The results (after visualization and encoding) or the location(s) where the results may be obtained are sent back to the client net services 218 at step 410.

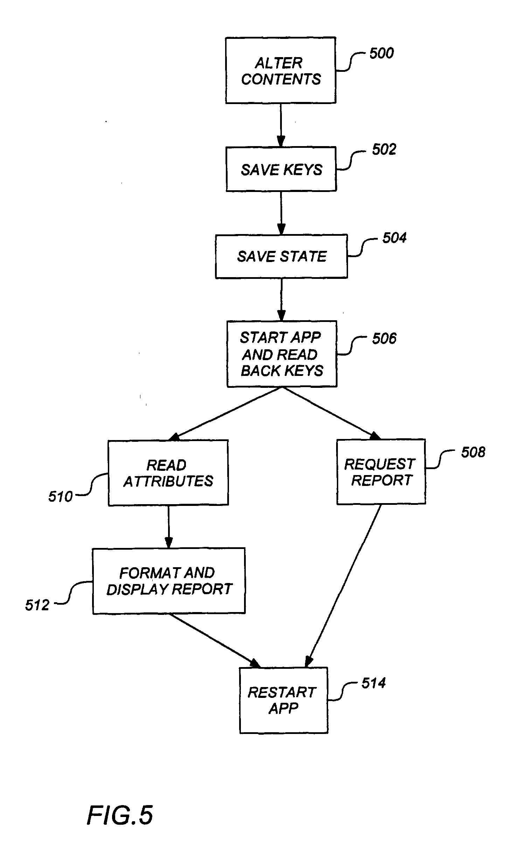

FIG. 5 is a flow chart further illustrating how the client 102 and servlet 108 respond to requests to show reports (e.g., maps). At step 500, the user is given an opportunity to alter the contents of the selected map objects. At step 502, the keys of the selected objects are saved to the PDA database 220. The state of the mapguide PDA 202 is saved to the PDA database 220 at step 504. A report application (such as MapGuide PDA application 202) is started up and the keys of the selected objects are read back from the PDA database 220 at step 506.

For local reports, the business attributes for the selected objects are read from the PDA database 220 at step 510 and the report is formatted and displayed at step 512. For reports that require more extensive formatting services (e.g., COLD FUSION Application Server) or require data not stored in the local PDA database 220, a request is issued to net services 218 (through synchronization application 238) to obtain the report at step 508.

After the user is finished viewing the report, and possibly other reports linked to it, the mapguide PDA application 202 is re-started at step 514 at which time the application 202 restores itself to its last saved state.

### Example Implementations

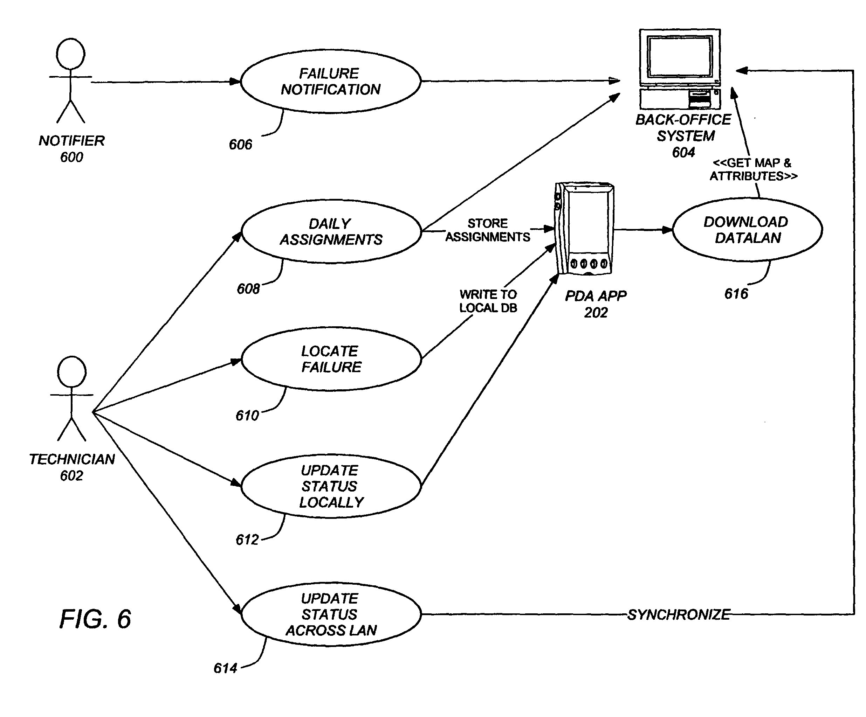

FIGS. 6-8 illustrate various implementations/situations in accordance with one or more embodiments of the invention. In the implementations of FIGS. 6-8 incidents in the field (e.g., failure incidents) occur wherein a field technician 602 retrieves assignments to repair/work at the failure incident location. Technician 602 retrieves map and geographic data for the failure location on a personal digital assistant and interacts with and updates the map and geographic data.

### Field Technician Working Offline

With respect to FIG. 6, a failure notification 606 creates a failure notification event for the back office system 604. Thus, upon a location in the field failing (e.g., a broken water main or street light), a notifier 600 notifies the back office system 604 where the failure incident is recorded for processing. The failure notification system 606 operates asynchronously from technician 602 activities.

FIG. 6 illustrates the implementation wherein a field technician 602 is working offline such that the technician only has net access at the beginning and end of the day. At the beginning of the day, the technician checks for his/her assignments 608 in the office 604 by communicating with the back office system 604 using the synchronization application 238 on the PDA 102. The assignments are conveyed to the servlet 108. Servlet 108 obtains the relevant information for the assignments. For each assignment, the servlet 108 obtains map and attribute data to be downloaded 616 from the back office system 604. Thereafter, the data is placed (by servlet 108) in a location that is accessible to PDA client 102. PDA client 102 downloads and stores the data in the local PDA database 220 (as described with respect to FIG. 4).

After obtaining the necessary information, the technician 602 disconnects from the network 118. As needed, the technician 602 accesses the mapguide PDA 202 to obtain and display 610 geographic information including one or more layers. Thus, the technician 602 can locate and examine a failure incident 610 (i.e., where a system has failed such as a broken water main) by viewing a map of the area of interest and viewing relevant attribute data . Accordingly, the technician 602 starts the PDA application 202 and specifies the current assignment. In response, the application 202 displays a map of the area of interest (i.e., as described with respect to FIG. 5). To note any changes on the map or to update the status of an assignment, the PDA application 202 captures the status information related to the assignment from the technician 602 and stores the information in the local PDA database 220 (i.e., the update status locally component 612).

At the end of the day, when the PDA 202 is online and connected to the network 118, the technician 602 can synchronize the PDA 202 with the back office system 604 using synchronization application 238. In other words, the technician 602 transfers the status information related to the day's assignments from the local PDA database 220 to the back office system 604 via the network 118 (i.e., component 614).

### Field Technician With Network Access

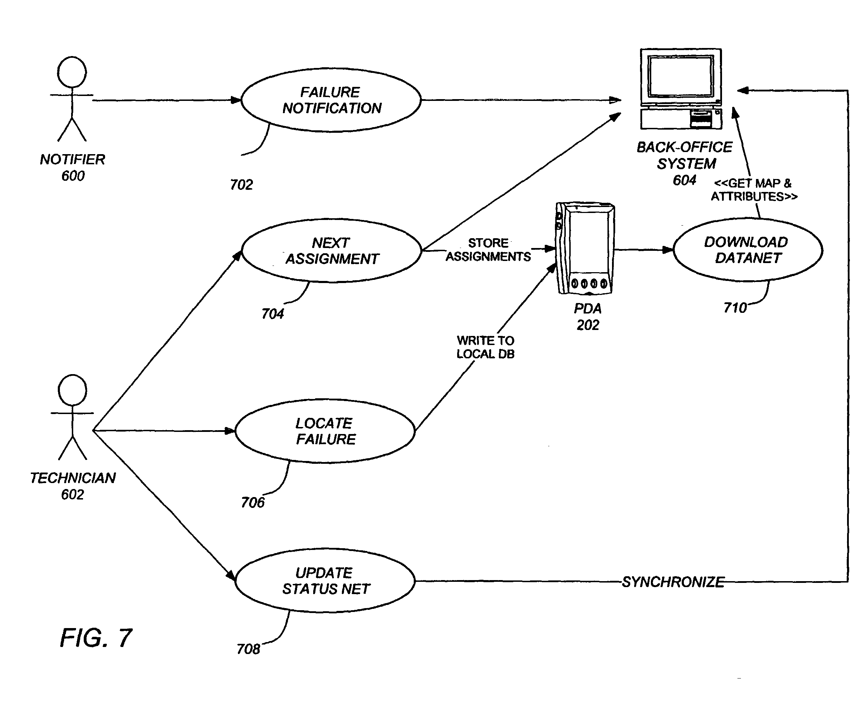

FIG. 7 illustrates the implementation wherein a field technician 602 maintains on-demand network 118 access to the back office system 604. Similar to the implementation of FIG. 6, failure notification 606 creates a failure notification event for the back office system 604. Upon a location in the field failing (e.g., a notification received that there is a broken water main or street light), a notifier 600 notifies the back office system 604 where the failure incident is so that the it may be recorded for processing. The failure notification system 606 operates asynchronously from technician 602 activities.

To determine the next location(s) or job(s) for the technician 602 to serve (i.e., component 704), the technician communicates with the back office system 604 using the network 118 (through synchronization application 238) to obtain the assignments and store them in PDA catalog 220 on the PDA 202 (as described with respect to FIG. 4). Accordingly, the technician 602 retrieves the next assignments for the day by communicating with the back office system 604 using synchronization application 238. The assignments are conveyed to the servlet 108. The servlet 108 receives the information about the assignments and dynamically downloads 710 all map and attribute data necessary for the assignments from the back office system 604 (i.e., by accessing MapGuide server 120). The downloaded data is then placed in a location accessible to PDA 102 and the location of the data is provided to synchronization application 238. Thereafter the data is retrieved and stored in the local PDA database 220.

Similar to the implementation described in FIG. 6, the locate failure component 706 is utilized to view a map of the area of interest, to view relevant attribute data, and to locate failure incidents. Accordingly, the technician 602 starts the mapguide PDA application 202 and specifies an assignment. In response, the application 202 displays a map of the area of interest (with the relevant layers) (as described with respect to FIG. 5). To provide the locate failure 706 functionality to an online technician 602, embodiments of the invention utilize a combination of local resources and resources obtained over the network 118.

Upon completing the viewing of the map (and other relevant data), component 708 provides the capability to capture status information related to the assignment from the technician 602 and transferring the information to the back office system 604 using the synchronization application 238 (i.e., the status is updated dynamically over the network 118). Thus, the failure is updated, synchronized, and potentially resolved with back office system 604 dynamically.

### Show Report

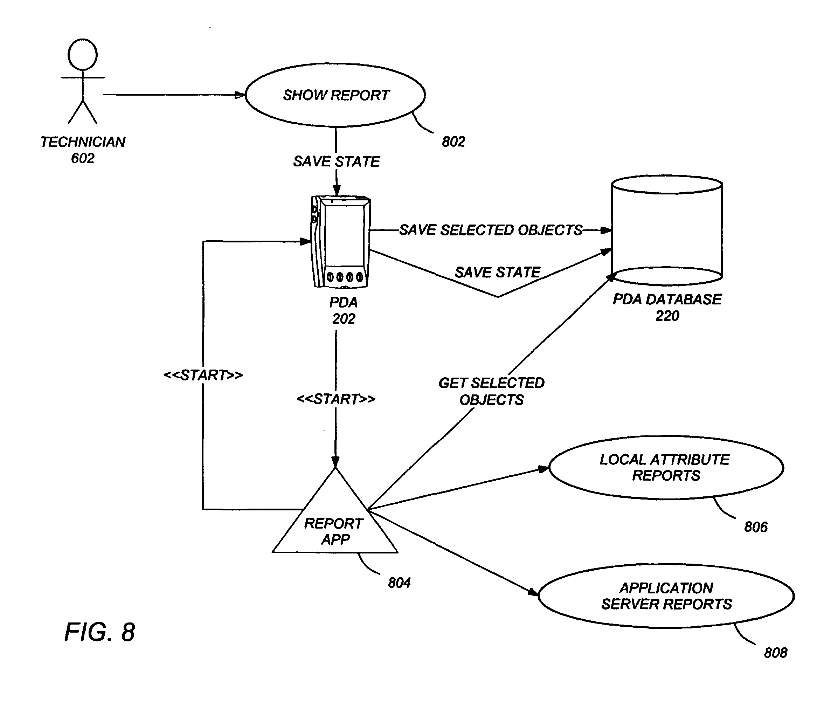

FIG. 8 illustrates implementations wherein a field technician 602 requests that a report be shown 802 for objects selected on a map on PDA 202 (i.e., the steps described in FIG. 5). In response to a report request, PDA application 202 saves the identifications (IDs) of the selected objects (step 502 of FIG. 5) and the state of the PDA application 202 (step 504 of FIG. 5) in the PDA database 220. Subsequently, the PDA application 202 starts up the report application 804 (step 506 of FIG. 5). The report application 804 reads the IDs of the selected objects from the database 220.

Report application 804 then generates the reports for the objects using local attributes and formatting capabilities. If there is no network 118 access to back office system 604, the report is established and generated locally 806 based on business attributes in the local database 220 (e.g., steps 510 and 512 of FIG. 5). However, if network 118 access to back office system 604 is available, the report application 804 communicates 808 with a report application server (e.g., with request broker 224 which interacts with servlet resident viewer services 232) (i.e., step 508 of FIG. 5). The report application server provides for querying across the network 118 for dynamically formatted reports or reports based on non-local attribute data.

Upon obtaining the requested report, report application 804 restarts the mapguide PDA application 202 which restores its previous state after reading the state from the PDA database 220 (i.e., step 514 of FIG. 5).

### Conclusion

This concludes the description of one or more embodiments of the invention. The following describes some alternative embodiments for accomplishing the present invention.

For example, any type of personal digital assistant or computer, such as a mainframe, minicomputer, or personal computer, or computer configuration, such as a timesharing mainframe, local area network, standalone personal computer, WINCE device, etc. could be used with the present invention.

In summary, a geographic information system on a personal digital assistant is provided that can be utilized both online and offline.

The foregoing description of one or more embodiments of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but by the claims appended hereto.

## Claims

1. A system for accessing geographic information comprising:
a) a server (106);
b) a personal digital assistant (102);
c) a servlet (108) executing on the server (106), the servlet (108) configured to:
i) obtain map data for one or more maps from the server (106);
ii) obtain attribute data (128) from the server (106);
iii) declutter the map and attribute (128) data;
iv) compact and encode the map and attribute (128) data;
v) place the compacted and encoded map and attribute (128) data over a network (118) in a location accessible to the personal digital assistant (102);
d) an application (130) on the personal digital assistant (102), the application (130) configured to:
i) obtain the compacted and encoded map and attribute (128) data from the location over the network (118);
ii) display the compacted and encoded map and attribute (128) data on the personal digital assistant (102).

2. The system of claim 1 wherein the application (130) is further configured to transmit an assignment to the servlet (108) and wherein the servlet (108) is further configured to transmit compacted and encoded map and attribute (128) data for the assignment

3. The system of claim 1 wherein the application (130) on the personal digital assistant (102) is further configured to:
obtain markup data comprised of pixel data for a markup entity from a user that utilizes a stylus to markup the map and attribute (128) data displayed on the personal digital assistant (102);
create a file comprised of the markup data; and
upload the file of markup data from the personal digital assistant (102) to the server (106).

4. The system of claim 3 wherein the application (130) uploads the data to a server (106) by:
obtaining a socket connection;
obtaining an inventory of resident mapsets;
searching for markup data associated with the resident mapsets; and
uploading all resident markup data to the server (106).

5. The system of claim 3 wherein the markup data is a redline line and the application (130) is configured to obtain the markup data from a user by:
determining when a new redline object has been selected; and
obtaining a redline object while a stylus remains in contact with a screen of the personal digital assistant (102).

6. The system of claim 3 wherein the markup data is a note and the application (130) is configured to obtain the markup data from a user by:
determining when a new note object has been selected;
accepting a user selection of an anchor point in a display of a map on the personal digital assistant (102);
displaying a text entry screen on the personal digital assistant (102);
accepting text user input in the text entry screen; and
displaying an icon representative of the note at the anchor point.

7. The system of claim 1 wherein the server (106) is configured to:
obtain a file comprised of markup data for the map and attribute (128) data;
convert the markup data to coordinate data; and
use the coordinate data to obtain a standard data format SDF file that can be used to superimpose the markup data on the map and attribute (128) data.

8. The system of claim 1 wherein:
a) the map data is comprised of:
1) multiple raster tiles; and
2) vector object data for an object of the map data;
b) the servlet (108) is configured to declutter, compact, and encode by:
1) generalizing a shape of the object by filtering out some of the vector object data;
2) differentially encoding a location of the object by encoding an offset for the location of the object with respect to an origin of the raster tile where the object is located; and
3) spatially indexing the vector object data by encoding the bounds of the object.

9. The system of claim 8 wherein the application (130) is further configured to determine an object identified by a point by:
evaluating bounds of one or more raster tiles to determine the raster tile containing the point; and
evaluating the bounds of objects within the raster tile containing the point to determine which object contains the point.

10. The system of claim 8 wherein the raster tiles are stored in row major format followed by an index for each raster tile stored in an order corresponding to the storage of the raster tiles, and wherein the index comprises:
a reference to a record containing the generalized vector object data; and
the offset and bounds for each raster tile.

11. The system of claim 1 wherein the servlet (108) obtains the map data prior to receiving a request for the map data from a client (102).

12. The system of claim 1 wherein the servlet (108) obtains the map data by performing the following prior to receiving a request for the map data from a client (102):
identifying one or more maps included in a mapset;
obtaining map data for the one or more maps from the server (106); and
creating a mapset comprised of the map data.

13. The system of claim 12 wherein the servlet (108) is configured to perform the identifying, obtaining, and creating steps in response to receiving a request relating to a work order.

14. The system of claim 1 wherein the servlet (108) obtains the map data by:
identifying one or more maps in a mapset;
instantiating separate threads on multiple central processing units to obtain map data for the one or more maps from the server (106) in parallel;
assembling a transient database comprised of the map data; and
creating a mapset comprised of the map data using the transient database.

## Patentansprüche

1. Ein System zum Zugriff auf geographische Informationen, mit:
a) einem Server (106);
b) einem persönlichen digitalen Assistenten (102);
c) einem auf dem Server (106) ablaufenden Servlet (108), wobei das Servlet (108) dazu eingerichtet ist:
i) Kartendaten für eine oder mehrere Karte/n von dem Server (106) zu erhalten;
ii) Attributdaten (128) von dem Server (106) zu erhalten;
iii) die Karten- und Attributdaten (128) zu entwirren;
iv) die Karten- und Attributdaten (128) zu kompaktifizieren und zu kodieren;
v) die kompaktifizierten und kodierten Karten- und Attributdaten (128) über ein Netz (118) an einem Ort abzulegen, auf den der persönliche digitale Assistent (102) zuzugreifen vermag;
d) einem Anwendungsprogramm (130) auf dem persönlichen digitalen Assistenter (102), wobei das Anwendungsprogramm (130) dazu eingerichtet ist:
i) die kompaktifizierten und kodierten Karten- und Attributdaten (128) über das Netz (118) von dem Ort zu erhalten;
ii) die kompaktifizierten und kodierten Karten- und Attributdaten (128) auf dem persönlichen digitalen Assistenten (102) anzuzeigen.

2. Das System nach Anspruch 1, bei dem das Anwendungsprogamm (130) ferner dazu eingerichtet ist, einen Auftrag an das Servlet (108) zu übertragen, und bei dem das Servlet (108) ferner dazu eingerichtet ist, kompaktifizierte und kodierte Kartenund Attributdaten (128) für den Auftrag zu übertragen.

3. Das System nach Anspruch 1, bei dem das Anwendungsprogramm (130) auf dem persönlichen digitalen Assistenten (102) ferner dazu eingerichtet ist:
Auszeichnungsdaten, die Pixeldaten für ein Auszeichnungselement enthalten,. von einem Benutzer zu erhalten, der einen Stift benutzt, um die auf dem persönlichen digitalen Assistenten (102) angezeigten Karten- und Attributdaten (128) auszuzeichnen;
eine Datei mit den Auszeichnungsdaten zu erzeugen; und
die Auszeichnungsdatendatei von dem persönlichen digitalen Assistenten (102) an den Server (106) hochzuladen.

4. Das System nach Anspruch 3, bei dem das Anwendungsprogramm (130) die Daten an einen Server (106) hochlädt, in dem es:
eine Socket-Verbindung aufbaut;
ein Verzeichnis vorhandener Kartensätze erhält;
nach Auszeichnungsdaten sucht, die den vorhandenen Kartensätzen zugeordnet sind; und
alle vorhandenen Auszeichnungsdaten zum Server (106) hochlädt.

5. Das System nach Anspruch 3, bei dem die Auszeichnungsdaten eine Abgrenzungslinie sind und das Anwendungsprogramm (130) dazu eingerichtet ist, die Auszeichnungsdaten von einem Benutzer zu erhalten, indem:
festgestellt wird, wenn ein neues Abgrenzungsobjekt ausgewählt worden ist; und
ein Abgrenzungsobjekt erhalten wird, während sich ein Stift weiter in Kontakt mit einer Anzeigefläche des persönlichen digitalen Assistenten (102) befindet.

6. Das System nach Anspruch 3, bei dem die Auszeichnungsdaten eine Anmerkung sind und das Anwendungsprogramm (130) dazu eingerichtet ist, die Auszeichnungsdaten von einem Benutzer zu erhalten, indem:
festgestellt wird, wenn ein neues Anmerkungsobjekt ausgewählt worden ist;
eine Benutzerauswahl eines Ankerpunkts in einer Darstellung einer Karte auf dem persönlichen digitalen Assistenten (102) akzeptiert wird;
eine Texteingabefläche auf dem persönlichen digitalen Assistenten (102) angezeigt wird;
eine Texteingabe durch den Benutzer in der Texteingabefläche akzeptiert wird; und
ein Sinnbild, das die Anmerkung darstellt, an dem Ankerpunkt angezeigt wird.

7. Das System nach Anspruch 1, bei dem der Server (106) dazu eingerichtet ist:
eine Datei mit Auszeichnungsdaten für die Karten- und Attributdaten (128) zu erhalten;
die Auszeichnungsdaten in Koordinatendaten umzuwandeln; und
die Koordinatendaten zu verwenden, um eine Datei im Standard-Datenformat SDF zu erhalten, die verwendet werden kann, um die Karten- und Attributdaten (128) mit den Auszeichnungsdaten zu überlagern.

8. Das System nach Anspruch 1, bei dem:
a) die Kartendaten aufweisen:
1) mehrere Rasterkacheln; und
2) Vektorobjektdaten für ein Objekt der Kartendaten;
b) das Servlet (108) zum Entwirren, Kompaktifizieren und Kodieren eingerichtet ist, indem:
1) eine Form des Objekts generalisiert wird, indem einige der Vektorobjektdaten ausgefiltert werden;
2) ein Ort des Objekts differenziell kodiert wird, indem ein Versatz des Orts des Objekts in Bezug auf einen Ursprung der Rasterkachel, in der sich das Objekt befindet, kodiert wird; und
3) die Vektorobjektdaten räumlich indiziert werden, indem die Grenzen des Objekts kodiert werden.

9. Das System nach Anspruch 8, bei dem das Anwendungsprogramm (130) ferner dazu eingerichtet ist, ein durch einen Punkt bezeichnetes Objekt zu bestimmen, indem:
Grenzen einer oder mehrerer Rasterkachel/n ausgewertet werden, um die den Punkt enthaltende Rasterkachel zu bestimmen; und
die Grenzen des Objekt innerhalb der den Punkt enthaltenden Rasterkachel ausgewertet werden, um zu bestimmen, welches Objekt den Punkt enthält.

10. Das System nach Anspruch 8, bei dem die Rasterkacheln in einem primär nach Reihen geordneten Format gespeichert werden, gefolgt von einem Index für jede Rasterkachel, der in einer der Speicherung der Rasterkacheln entsprechenden Ordnung gespeichert ist, und bei dem der Index aufweist:
einen Verweis auf einen Datensatz, der die generalisierten Vektorobjektdaten enthält; und
den Versatz und die Grenzen für jede Rasterkachel.

11. Das System nach Anspruch 1, bei dem sich das Servlet (108) die Kartendaten beschafft, bevor von einem Client (102) eine Anforderung für die Kartendaten eingeht.

12. Das System nach Anspruch 1, bei dem sich das Servlet (108) die Kartendaten beschafft, indem folgendes ausgeführt wird, bevor von einem Client (102) eine Anforderung für die Kartendaten eingeht:
Bestimmen einer oder mehrerer Karte/n, die in einem Kartensatz enthalten ist/sind;
Erhalten von Kartendaten für die eine oder mehrere Karte/n von dem Server (106); und
Erzeugen eines die Kartendaten enthaltenden Kartensatzes.

13. Das System nach Anspruch 12, bei dem das Servlet (108) dazu eingerichtet ist, die Schritte des Bestimmens, Erhaltens und Erzeugens ansprechend auf den Eingang einer Anforderung auszuführen, die sich auf eine Arbeitsreihenfolge bezieht.

14. Das System nach Anspruch 1, bei dem das Servlet (108) die Kartendaten erhält, indem:
eine oder mehrere Karte/n in einem Kartensatz ermittelt werden;
getrennte Verarbeitungsfäden auf mehreren Prozessoren instantiiert werden, um parallel Kartendaten für die eine oder die mehreren Karte/n von dem Server (106) zu erhalten;
eine flüchtige Datenbank mit den Kartendaten zusammengestellt wird; und
unter Verwendung der flüchtigen Datenbank ein Kartensatz erzeugt wird, der die Kartendaten aufweist.

## Revendications

1. Système d'accès à des informations géographiques comprenant :
a) un serveur (106) ;
b) un assistant numérique personnel (102) ;
c) une application servlet (108) qui s'exécute sur le serveur (106), l'application servlet (108) étant configurée pour :
i) obtenir auprès du serveur (106) des données de carte pour une ou plusieurs cartes ;
ii) obtenir auprès du serveur (106) des données d'attribut (128) ;
iii) déparasiter les données de carte et d'attribut(128) ;
iv) compacter et coder les données de carte et d'attribut (128) ;
v) placer les données de carte et d'attribut (128) compactées et codées sur un réseau (118) à un emplacement accessible par l'assistant numérique personnel (102) ;
d) une application (130) placée dans l'assistant numérique personnel (102), l'application (130) étant configurée pour :
i) obtenir les données de carte et d'attribut (128) compactées et codées depuis l'emplacement du réseau (118) ;
ii) afficher les données de carte et d'attribut (128) compactées et codées sur l'assistant numérique personnel (102).

2. Système selon la revendication 1, dans lequel l'application (130) est en outre configurée pour transmettre une affectation à l'application servlet (108) et dans lequel l'application servlet (108) est en outre configurée pour transmettre des données de carte et d'attribut (128) compactées et codées concernant l'affectation.

3. Système selon la revendication 1, dans lequel l'application (130) placée dans l'assistant numérique personnel (102) est en outre configurée pour:
obtenir des données de marquage d'une entité de marquage, constituées de données de pixel, d'un utilisateur qui utilise un stylet pour marquer les données de carte et d'attribut (128) affichées sur l'assistant numérique personnel (102) ;
créer un fichier constitué des données de marquage ; et
télécharger le fichier de données de marquage depuis l'assistant numérique personnel (102) vers le serveur (106).

4. Système selon la revendication 3 dans lequel l'application (130) télécharge les données vers un serveur (106) par la mise en oeuvre des étapes consistant à :
obtenir une connexion de socket ;
obtenir un inventaire des suites de cartes résidentes ;
chercher des données de marquage associées avec les suites de cartes résidentes ; et
télécharger l'ensemble des données de marquage résidentes vers le serveur (106).

5. Système selon la revendication 3 dans lequel les données de marquages sont constituées d'une ligne de délimitation et l'application (130) est configurée pour obtenir d'un utilisateur les données de marquage par la mise en oeuvre des étapes consistant à :
déterminer le moment où un nouvel objet de ligne de délimitation a été sélectionné ; et
obtenir un objet de ligne de délimitation lorsqu'un stylet reste au contact d'un écran de l'assistant numérique personnel (102).

6. Système selon la revendication 3, dans lequel les données de marquage constituent une note et l'application (130) est configurée pour obtenir les données de marquage auprès d'un utilisateur par la mise en oeuvre des étapes consistant à :
déterminer le moment où un nouvel objet note a été sélectionné ;
accepter une sélection d'utilisateur d'un point d'ancrage dans un affichage d'une carte sur l'assistant numérique personnel (102) ;
afficher un écran de saisie de texte sur l'assistant numérique personnel (102) ;
accepter la saisie d'un texte d'utilisateur sur l'écran de saisie de texte ; et
afficher une icône représentative de la note au point d'ancrage.

7. Système selon la revendication 1 dans lequel le serveur (106) est configuré pour :
obtenir un fichier constitué de données de marquage pour les données de carte et d'attribut (128) ;
convertir les données de marquage en données de coordonnées ; et
utiliser les données de coordonnées pour obtenir un fichier au format de données standard (SDF) susceptible d'être utilisé pour superposer les données de marquage aux données de carte et d'attribut (128).

8. Système selon la revendication 1 dans lequel
a) les données de carte sont constituées de:
1) plusieurs mosaïques d'images ; et
2) de données d'objet vectoriel concernant un objet des données de carte ;
b) l'application servlet (108) est configurée pour assurer le déparasitage, le compactage et le codage au moyen des étapes consistant à :
1) généraliser une forme de l'objet par extraction de certaines des données d'objet vectoriel ;
2) coder de manière différentielle un emplacement de l'objet par codage d'un décalage de l'emplacement de l'objet par rapport à une origine de la mosaïque d'images où est situé l'objet ; et
3) indexer dans l'espace les données d'objet vectoriel par codage des limites de l'objet.

9. Système selon la revendication 8 dans lequel l'application (130) est en outre configurée pour déterminer un objet identifié par un point par la mise en oeuvre consistant à :
évaluer les limites d'une ou plusieurs mosaïques d'images pour déterminer la mosaïque d'images contenant le point ; et
évaluer les limites des objets dans la mosaïque d'images contenant le point pour déterminer l'objet qui contient le point.

10. Système selon la revendication 8 dans lequel les mosaïques d'image sont stockées au format croissant par ligne suivi d'un index pour chaque mosaïque d'images stockée dans un ordre correspondant au stockage des mosaïques d'images et dans lequel l'index comprend :
une référence à un enregistrement comprenant les données d'objet vectoriel généralisées ; et
le décalage et les limites de chacune des mosaïques d'images.

11. Système selon la revendication 1 dans lequel l'application servlet (108) obtient les données de carte avant de recevoir une demande de données de carte d'un client (102).

12. Système selon la revendication 1 dans lequel l'application servlet (108) obtient les données de carte par l'application des étapes suivantes avant de recevoir une demande de données de carte d'un client (102) :
identifier une ou plusieurs cartes constituant une suite de cartes ;
obtenir des données de carte pour ladite ou lesdites une ou plusieurs cartes du serveur (106) ; et
créer une suite de cartes constituée des données de carte.

13. Système selon la revendication 12 dans lequel l'application servlet (108) est configurée pour mettre en oeuvre les étapes d'identification, d'obtention et de création en réponse à la réception d'une demande relative à un ordre d'exécution.

14. Système selon la revendication 1 dans lequel l'application servlet (108) obtient les données de carte par la mise en oeuvre des étapes consistant à :
identifier une ou plusieurs cartes dans une suite de cartes ;
instancier des flux distincts sur plusieurs unités centrales de traitement pour obtenir en parallèle des données de carte pour ladite ou lesdites une ou plusieurs cartes du serveur (106) ;
assembler une base de données transitoire constituée des données de carte ; et
créer une suite de cartes constituée des données de carte en utilisant la base de données transitoire.
